Europäisches Patentamt

**(19)** European Patent Office

Office européen des brevets

**(11)** Numéro de publication: **0 236 154**
**A1**

**(12)** # DEMANDE DE BREVET EUROPEEN

**(21)** Numéro de dépôt: **87400088.8**

**(22)** Date de dépôt: **15.01.87**

**(51)** Int. Cl.⁴: **B 62 B 3/02**
**B 62 B 3/00**

**(30)** Priorité: **17.01.86 FR 8600614**

**(43)** Date de publication de la demande:
**09.09.87 Bulletin 87/37**

**(84)** Etats contractants désignés:
**AT BE CH DE ES FR GB GR IT LI LU NL SE**

**(71)** Demandeur: **NEWTON et REALITES SOCIETE A RESPONSABILITE LIMITEE**
**Route du Hoc Gonfreville l'Orche**
**F-76700 Harfleur (Seine Maritime)  (FR)**

**(72)** Inventeur: **Drouant, Jean-Pierre André**
**12 Allée du Jeu de Boules**
**Sarcelles (Val d'Oise)  (FR)**

**(74)** Mandataire: **Rataboul, Michel**
**Cabinet Michel Rataboul 69, rue de Richelleu**
**F-75002 Paris  (FR)**

**(54)** Chariot pliant à panier, notamment pour utilisation dans des magasins de vente en libre service.

**(57)** Le chariot pliant, notamment pour magasins en libre service, est du type comprenant un panier devant contenir des articles, un châssis 1 équipé de roulettes 2-4 et solidaire de montants arrières 24-29 reliés par une traverse supérieure 30 servant de poignée.

Il est caractérisé en ce qu'il comprend aussi des montants avants 20, 21 et 22 reliés au châssis 1 et des longerons latéraux supérieurs 32 et 33 reliant deux à deux les montants avants et arrières 21-22 et 29, les montants 20-21-22 et 24-29 étant faits en deux parties 20 et 21-22, 24a-24b et 29a-29b articulées d'une part entre elles et d'autre part au châssis 1, et en ce que deux bielles latérales obliques 15 et 17 sont articulées par leurs extrémités, respectivement au châssis 1 au voisinage de sa zone arrière 1c et à une traverse supérieure 16 reliant les montants avants 21 et 22, les longerons 32 et 33 étant également articulés aux montants avants et arrières 21-22 et 29a-29b, le panier étant formé, quand le chariot est dressé, par quatre panneaux latéraux 45-46-47 et 48 et un fond 36-37 dont certains 36-37, 47 et 48 au moins sont articulés pour pouvoir être rabattus les uns sur les autres quand le chariot est plié.

. FIG. 2

**Description**

CHARIOT A PANIER, NOTAMMENT POUR UTILISATION DANS DES MAGASINS DE VENTE EN LIBRE SERVICE

L'invention vise un chariot qui peut être plié pour occuper un volume moins important que lorsqu'il est dressé en position d'utilisation et qui peut éventuellement être utilisé comme un diable.

On a cherché depuis longtemps à réaliser des chariots qui pourraient être utilisés dans des magasins en libre service, par exemple, et qui pourraient ensuite être facilement pliés pour être placés dans des coffres de voitures en occupant un volume minimum.

Malheureusement, aucune solution satisfaisante n'a été proposée jusqu'à maintenant car le problème concret est très difficile à résoudre. En effete pour pouvoir être utilisé dans un magasin à libre service, un chariot doit être très robuste car son panier doit être volumineux et est destiné à recevoir des articles souvent lourds : bouteilles par exemple. Cette robustesse est incompatible avec la légéreté et la simplicité de la construction qui sont indispensables à une structure pliante. Le problème s'est avéré d'ailleurs si difficile qu'il n'existe pratiquement aucun chariot comprenant un panier du type nécessaire à des emplettes dans un magasin en libre service et qui, simultanément, puisse être replié.

Ainsi, par exemple :
- Le document AU-A-500 133 décrit un chariot qui peut être plié et transformé en diable mais quand il est utilisé en chariot roulant et stable, comme représenté sur les figures 8 et 9 de ce document, il constitue un wagonnet sans parois latérales et est donc inapte à son utilisation dans un magasin de vente au détail.
- Le document DE-A-2 233 214 décrit aussi un chariot pliant, utilisable comme chariot à panier et comme diable mais le panier n'est pas pliant et intégré à la structure du chariot : il est amovible et peut être fixé ou pas à des cadres articulés. Si le panier est retiré, les cadres se plient d'eux mêmes. L'observation de la figure 1 de ce document montre à l'évidence que ce chariot ne peut pas être plié sous un volume faible en vue d'être conservé sans gène dans le coffre d'une voiture.
- Le document US-A-3 064 989 décrit un chariot pliant et transformable à plusieurs fins mais ne prévoit aucun panier pliant pour la réception d'articles divers, tels que ceux qui sont mis en vente dans des magasins de détail en libre service. Le chariot est simplement adapté à recevoir un élément amovible 41 et si l'on admet qu'il peut s'agir d'un panier, ce document n'enseigne pas comment réaliser une structure unique, pliante et destinée à des emplettes dans un magasin. On voit d'ailleurs sur la figure 1 de ce document que tout le volume de la structure situé sous les bras 25 est perdu. Un panier de volume habituel et posé sur le dessus de ce chariot aurait des bords supérieurs si hauts que l'on ne pourrait placer des petits objets qu'en les lachant de haut au risque de les casser et que les personnes de petite taille ne pourraient pas les reprendre.
- Le document GB-A-2 043 547 décrit un diable transformable en chariot à quatre roues mais, pour les mêmes raisons que celles énoncées à propos du document US-A-3 064 989, ce chariot est inutilisable par le grand public dans des magasins de vente au détail.

La présente invention apporte une solution nouvelle au problème de réaliser un chariot pliant et utilisable par le grand public dans des magasins de vente au détail en libre service ou pas.

A cette fin, l'invention a pour objet un chariot pliant, notamment pour magasins en libre service, du type comprenant un panier devant contenir des articles, un châssis équipé de roulettes et solidaire de montants arrières reliés par une traverse supérieure servant de poignée, caractérisé en ce qu'il comprend aussi des montants avants reliés au châssis et des longerons latéraux supérieurs reliant deux à deux les montants avants et arrières, les montants étant faits en deux parties articulées d'une part entre elles et d'autre part au châssis, et en ce que deux bielles latérales obliques sont articulées par leurs extrémités, respectivement au châssis au voisinage de sa zone arrière et à une traverse supérieure reliant les montants avants, les longerons étant également articulés aux montants avants et arrières, le panier étant formé, quand le chariot est dressé, par quatre panneaux latéraux et un fond, dont certains au moins sont articulés pour pouvoir être rabattus les uns sur les autres quand les chariot est plié.

Selon d'autres caractéristiques de l'invention :
- le fond du panier est articulé aux bielles et est susceptible de coopérer avec des butées prévues respectivement à l'avant et à l'arrière du chariot pour être calé en position d'utilisation quand le chariot est dressé;
- le fond du panier est articulé aux montants arrières et repose sur au moins un support solidaire des montants avants, des moyens étant de préférence prévus pour immobiliser le fond en position d'utilisation quand le chariot est dressé;
- la traverse supérieure qui relie les montants arrières est située dans un plan situé en avant de celui desdits montants arrières pour constituer, quand le chariot est plié, un appui du même type que celui de diables de type connu;
- les roulettes du châssis sont montées sur une pièce mobile par rapport au châssis proprement dit afin de pouvoir être placée sélectivement dans une position dite d'utilisation dans laquelle les roulettes sont perpendiculaires au plan du châssis et une position dite d'effacement dans laquelle les roulettes sont parallèles audit plan du châssis;
- le fond du panier est relié cinématiquement à des montants afin que lors du pliage du chariot, les mouvements de ces éléments soient liés;
- le fond du panier porte un anneau dans lequel passe un lien dont les extrémités sont fixées en bas des montants avants.

Grâce à une telle structure, il suffit de faire basculer le fond du panier pour le placer dans le plan des bielles, puis de plier les montants avants contre les bielles et les montants arrières également contre lesdites bielles pour obtenir une structure substantiellement plate et occupant donc très peu de place. En outre, en utilisant la traverse supérieure avant comme poignée, la traverse arrière sert de support et le chariot peut être utilisé comme un diable.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique en perspective d'un cha riot selon l'invention en position dressée, c'est-à-dire en position d'utilisation de son panier.

La figure 2 est une vue schématique en perspective montrant une position intermédiaire de ses éléments, lors du pliage du chariot.

Les figures 3 et 4 sont des vues schématiques montrant deux positions des roulettes lorsque celes-ci sont susceptibles d'être mises dans deux positions respectivement d'utilisation et d'effacement.

La figure 5 est une vue schématique en perspective montrant le verrouillage du fond du panier sur les montants arrières.

La figure 6 est une vue schématique montrant une réalisation de butées destinées à l'immobilisation du fond du panier en position d'utilisation.

Les figures 7 et 8 sont des vues schématiques de deux modes de réalisation différents mais montrant le chariot dans la même position qui correspond au début de son pliage.

Les figures 9, 10 et 11 sont des vues schématiques illustrant la suite du pliage du chariot et son utilisation soit comme diable, soit lors de son rangement.

La figure 11 est une vue schématique montrant la réalisation d'une articulation des deux parties d'un montant.

Le chariot représenté au dessin comprend un châssis 1 constitué par un cadre rectangulaire présentant quatre côtés 1a, 1b, 1c et 1d et supporté par deux roulettes arrières 2 et deux roulettes avants 4.

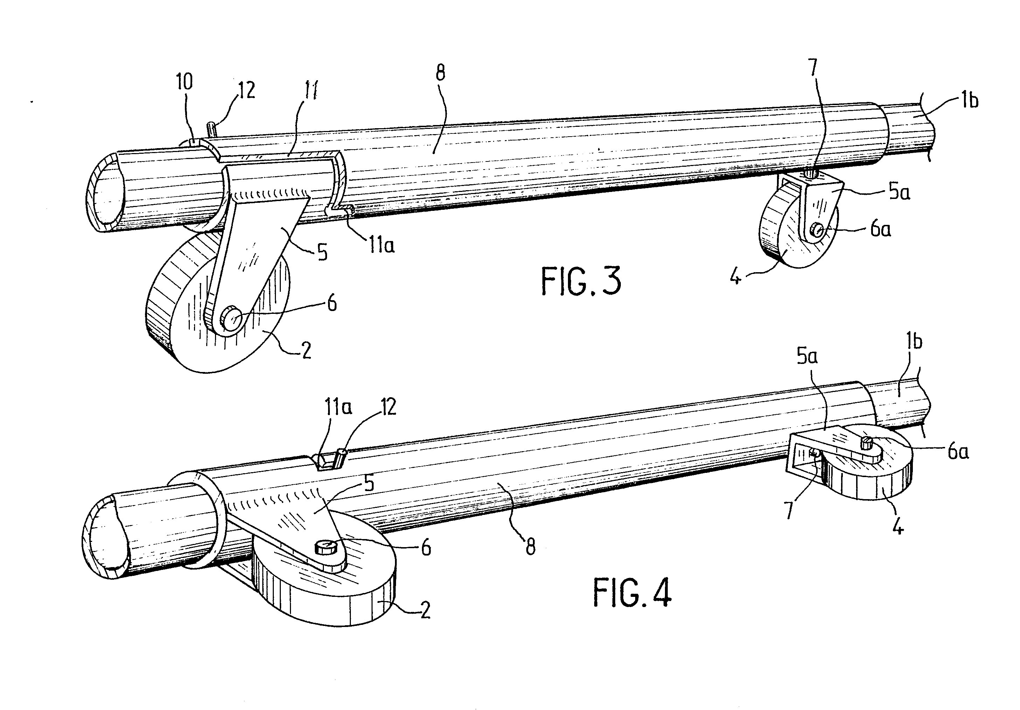

L'une des roulettes 2, voir figures 3 et 4, est montée librement sur un axe 6 porté par une chape 5, solidaire d'un manchon 8 monté coulissant sur le côté 1a du châssis 1. La roulette 4 correspondante est portée par un axe 6a supporté par une chape 5a montée tournante sur un axe solidaire dudit manchon 8. Le manchon 8 comporte une fente 10 et une rainure 11, un téton 12 solidaire du côté 1a étant prévu pour coopérer sélectivement avec la fente 10 ou avec la rainure 11 lorsque l'on fait pivoter le manchon 8 par rapport au côté 1a.

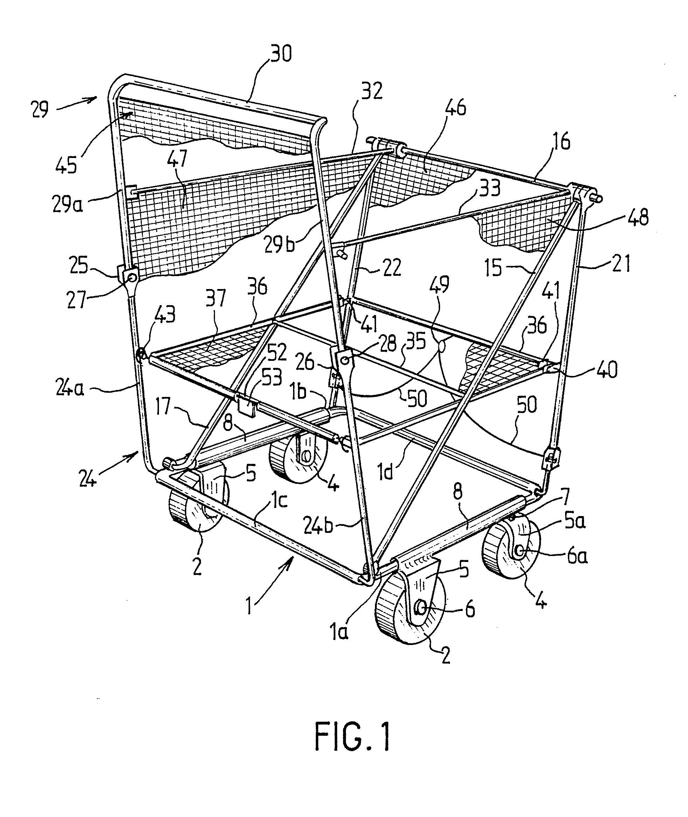

La fente 10 est agencée de manière telle que le téton 12 s'engage légèrement à force et que les roulettes 2 et 4 soient, en position d'utilisation des figures 1 et 3, dans un plan perpendicu laire au plan du châssis 1. La rainure 11 est, au contraire, agencée pour que, lorsque le téton 12 est engagé dans le fond 11a de ladite rainure 11, les roulettes 2 et 4 soient basculées dans un plan parallèle à celui du châssis 1.

Le fond 11a de la rainure 11 est rétréci afin que le téton 12 y pénètre légèrement à force.

Les deux autres roulettes 2 et 4 sont montées sur le côté 1b de la même manière que sur le côté 1a.

Sur le côté 1a, au voisinage du côté 1c s'articule l'une des extrémités d'une bielle latérale oblique 15 dont l'autre extrémité s'articule sur une traverse supérieure avant 16. Une seconde bielle latérale oblique 17, située sur l'autre côté du chariot s'articule par une extrémité sur le côté 1b, tandis que son autre extrémité s'articule sur la même traverse supérieure avant 16.

Le châssis 1 est constitué d'éléments tubulaires et le côté 1d est traversé par une barre 19 dont les extrémités libres 20 sont pliées pour former un U et s'articulent sur des axes 23 portés par des chapes 34 formées aux extrémités inférieures de montants avants 21 et 22. Les extrémités supérieures des montants 21 et 22 sont articulées à la barre transversale supérieure 16.

Le côté 1c est traversé par une barre 24 pliée en U et dont les extrémités des parties latérales 24a et 24b sont terminées par des chapes respectivement 25 et 26 supportant des axes 27 et 28 sur lesquels s'articulent les extrémités des parties latérales 29a et 29b d'une barre 29 pliée en U et dont le segment central transversal 30 constitue une poignée pour la manoeuvre du chariot. Ce segment 3 est placé dans un plan situé an avant du plan commun aux parties latérales 29a et 29b.

Celles-ci sont reliées à la barre 16 par des longerons 32 et 33 articulés par leurs deux extrémités.

Les parties latérales 29a et 29b, avec les parties latérales 24a et 24b constituent les montants arrières du chariot.

En un point intermédiaire médian de leur longueur, les bielles 15 et 17 sont reliées par une tige transversale 35 selon l'axe de laquelle peut pivoter un cadre 36 munie d'une grille 37 constituant ensemble le fond d'un panier du chariot.

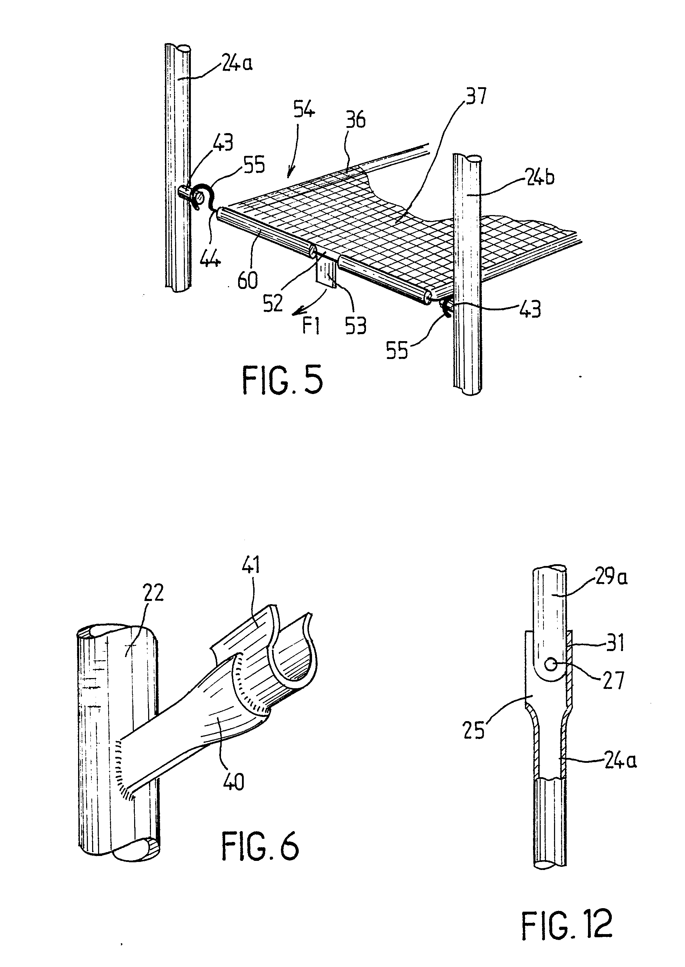

Les montants avants 21 et 22 portent chacun (voir figure 6) une patte 40 qui supporte une pince élastique 41 s'ouvrant vers le haut, et qui est destinée à recevoir le côté correspondant du cadre 36. Les parties latérales 24a et 24b comportent chacune un téton 43 et le bord du cadre 36 opposé à celui destiné à coopérer avec les pinces 41 comporte un verrou 54 constitué d'une barre 44 montée pivotante dans un côté tubulaire 60 du cadre 36 et dont les extrémités sont terminées par des crochets 55 destinés à coopérer avec les tétons 43.

Le côté tubulaire 60 comporte une ouverture 52 et la barre 44 est solidaire d'une palette 53 qui s'étend dans l'ouverture 52 afin de pouvoir commander les mouvements de mise en place et d'effacement des crochets 55. En faisant pivoter la palette 53 dans le sens de la flèche F1, on oblige les crochets 55 à pivoter et à quitter leur position active, ce qui libère le fond 36-37 et permet à celui-ci de pivoter selon l'axe de la tige transversale 35. En manoeuvrant la palette 53 en sens inverse, on oblige les crochets 55 à coiffer les têtons 43 et, donc, à immobiliser le fond 36-37 en position d'utilisation (voir figure 5). Les parties latérales 29a et 29b portent une grille 45; les montants 21 et 22 portent une grille 46; les longerons 32 et 33 portent chacun respectivement des grilles 47 et 48. Ainsi, le chariot présente un panier destiné à recevoir des articles à transporter, notamment prélevés sur des rayonnages de magasins à libre service.

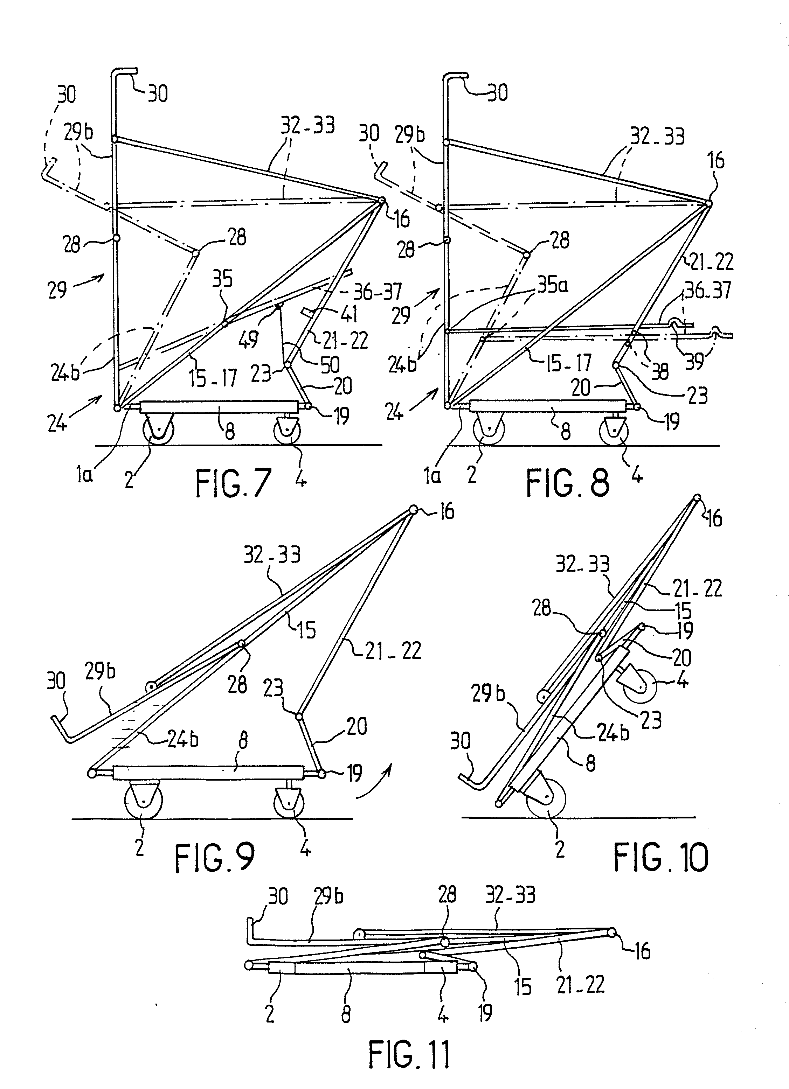

La chape 25 est aménagée de manière que la partie latérale 29a ne puisse basculer que dans un sens (voir figure 11), une butée 31 étant prévue cet effet. Les chapes 26 et 34 sont réalisées de la même façon que la chape 25.

La grille 37 du cadre 36 comporte un anneau 49 dans lequel passe un lien 50 dont les extrémités sont fixées aux montants 21 et 22, au voisinage des axes 23.

Les figures 7 à 11 illustrent le pliage du chariot pour le faire passer de sa position dressée, ou position d'utilisation, (figure 1) à la position repliée (figures 10 et 11).

On relève les grilles 47 et 48 pour les placer dans le plan des longerons 32 et 33, puis on fait pivoter la palette 53 pour déverrouiller le bord correspondant du fond 36-37 et on appuie, par exemple avec le pied, sur ledit bord du fond 36-37, afin de faire basculer celui-ci selon l'axe de la tige 35 pour le placer dans le plan des bielles 15 et 17.

Durant le mouvement de basculement du fond 36-37, le lien 50 tire sur les montants 21 et 22 qui basculent légèrement selon les axes 23. On fait ensuite basculer la barre 29 selon les axes 27 et 28 afin de venir la faire porter contre la barre 24, cette dernière venant se situer sensiblement dans le plan des bielles 15 et 17 (voir figure 9).

Si l'on soulève le châssis 1 en le faisant pivoter à la manière d'une brouette autour des roulettes avant 2, pour l'amener contre les bielles 15 et 17, on peut utiliser le chariot à la manière d'un diable ( figure 10) : la poignée 30 forme le support inférieur habituel, tandis que la traverse supérieure avant 16 constitue, dans cette position, l'organe de manoeuvre dudit diable.

On peut pour le rangement et, par exemple, pour transporter le chariot dans un coffre de voiture, placer les quatre roulettes en position escamotée, explicitée en regard des figures 3 et 4.

Pour ramener le chariot en position d'utilisation, on procéde de la façon inverse, toutes les manoeuvres s'effectuant facilement, sans avoir recours à des outils et la mise en place du fond 36-37 dans sa position d'utilisation assurant le verrouillage de l'ensemble.

On pourrait prévoir des organes pour verrouiller les montants 21 et 22 sur les bielles 15 et 17 dans la position de pliage.

Les quatre côtés 1a à 1d du châssis 1 constituent un quadrilatère qui peut servir de support à un panneau grillagé, par exemple, sur lequel des articles peuvent être posés si l'on ne veut pas les placer dans le panier.

Le chariot qui vient d'être décrit peut être réalisé de différentes manières et, notamment, en tubes et fils métalliques soudés. Les panneaux qui constituent le panier peuvent être des grilles, des panneaux pleins ou ajourés, formés de fils métalliques parallèles, etc.

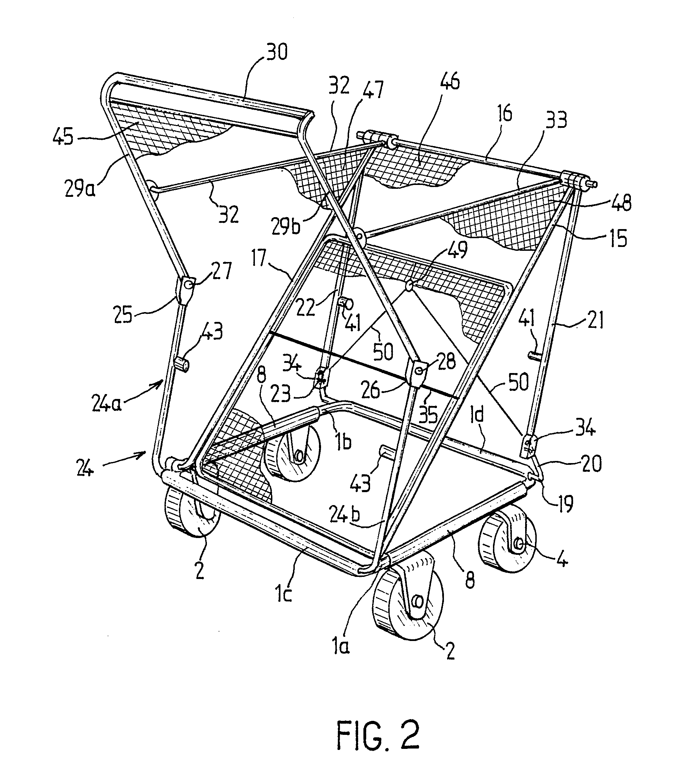

Selon le mode de réalisation des figures 1 à 7, le fond 36-37 est articulé selon l'axe de la tige 35, sur les bielles obliques 15 et 17. Pour plier le chariot (figures 2 et 7), il faut déverrouiller le fond 36-37 et le faire pivoter.

Selon le mode de réalisation de la figure 8, le fond 36-37 est articulé sur les montants arrières du chariot par un axe 35a (tige transversale ou tourillons latéraux, comme cela est connu en soi) et repose à l'avant soit sur une tige transversale, soit sur des embouts latéraux 38. Afin de verrouiller le fond 36-37 en position d'utilisation, celui-ci comprend des logements 39 destinés à coiffer la tige ou les embouts 38.

Pour plier le chariot, on soulève le fond 36-37 à l'avant afin que les logements quittent la tige ou les embouts 38 puis on plie les montants avants et arrières. Le fond 36-37 glisse librement sur la tige ou les embouts 38 et trouve automatiquement sa place dans le plan qui doit être le sien quand le chariot est complètement plié. On remarque sur la figure 8, qu'au début du pliage, le fond 36-37 dépasse assez nettement le contour du chariot mais quand le pliage est plus avancé (et bien entendu quand il est terminé), la traverse 16 s'est incliné vers l'avant de sorte que, finalement, le fond 36-37 est bien inscrit dans le contour du chariot plié et ne constitue aucune gêne.

**Revendications**

1- Chariot pliant, notamment pour magasins en libre service, du type comprenant un panier devant contenir des articles, un châssis (1) équipé de roulettes (2-4) et solidaire de montants arrières (24-29) reliés par une traverse supérieure (30) servant de poignée, caractérisé en ce qu'il comprend aussi des montants avants (20, 21 et 22) reliés au châssis (1) et des longerons latéraux supérieurs (32 et 33) reliant deux à deux les montants avants et arrières (21-22 et 29), les montants (20- 21-22 et 24-29) étant faits en deux parties (20 et 21-22, 24a-24b et 29a-29b) articulées d'une part entre elles et d'autre part au châssis (1), et en ce que deux bielles latérales obliques 15 et 17) sont articulées par leurs extrémités, respectivement au châssis (1) au voisinage de sa zone arrière (1c) et à une traverse supérieure (16) reliant les montants avants (21 et 22), les longerons (32 et 33) étant également articulés aux montants avants et arrières (21-22 et 29a-29b), le panier étant formé, quand le chariot est dressé, par quatre panneaux latéraux (45-46-47 et 48) et un fond (36-37), dont certains 36-37, 47 et 48 au moins sont articulés pour pouvoir être rabattus les uns sur les autres quand le chariot est plié.

2- Chariot selon la revendication 1, caractérisé en ce que le fond (36-37) du panier est articulé aux bielles (15 et 17) et est susceptible de coopérer avec des butées (40-41 et 43) prévues respectivement à l'avant et à l'arrière du chariot pour être calé en position d'utilisation quand le chariot est dressé.

3- Chariot selon la revendication 1, caractérisé en ce que le fond (36-37) du panier est articulé aux montants arrières (24a-24b) et repose sur au moins un support (38) solidaire des montants avants (21-22), des moyens (39) étant de préférence prévus pour immobiliser le fond (36-37) en position d'utilisation quand le chariot est dressé.

4- Chariot selon la revendication 1, caractérisé en ce que la traverse supérieure (30) qui relie les montants arrières (29a et 29b) est située dans un plan situé en avant de celui desdits montants arrières (29a et 29b) pour constituer, quand le chariot est plié, un appui du même type que celui de diables de type connu.

5- Chariot selon la revendication 1, caractérisé en ce que les roulettes (2 et 4) du châssis (1) sont montées sur une pièce (8) mobile par rapport au châssis (1) proprement dit afin de pouvoir être placée sélectivement dans une position dite d'utilisation dans laquelle les roulettes (2 et 4) sont perpendiculaires au plan du châssis (1) et une position dite d'effacement dans laquelle les roulettes (2 et 4) sont parallèles audit plan du châssis (1).

6- Chariot selon la revendication 1, caractérisé en ce que le fond (36-37) du panier est relié cinématiquement à des montants (21 et 22) afin que lors du pliage du chariot, les mouvements de ces éléments soient liés.

7- Chariot selon la revendication 6, caractérisé en ce que le fond (36-37) du panier porte un anneau (49) dans lequel passe un lien (50) dont les extrémités sont fixées en bas des montants avants (21 et 22).

FIG.1

FIG. 2

FIG.3

FIG.4

FIG. 5

FIG. 6

FIG. 12

0236154

0236154

FIG.7

FIG.8

FIG.9

FIG.10

FIG.11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 493 262 (R.H. FERNEAU)<br>* En entier * | 1 | B 62 B 3/02<br>B 62 B 3/00 |
| | --- | | |
| A | DE-A-3 231 323 (D. CHRISTIERSON)<br>* Figures; abrégé; revendications 1,5,6 * | 1 | |
| | --- | | |
| D,A | DE-A-2 233 214 (W. BACKHAUS)<br>* Figures; revendications 1,2 * | 1,5 | |
| | --- | | |
| A | GB-A- 619 397 (T. MANN)<br>* Figures * | 5 | |
| | ----- | | |

DOMAINES TECHNIQUES RECHERCHES (Int. Cl.4)

B 62 B

Le présent rapport de recherche a été établi pour toutes les revendications

| Lieu de la recherche | Date d'achèvement de la recherche | Examinateur |
|---|---|---|
| LA HAYE | 29-04-1987 | FRANKS B.G. |